# EUROPÄISCHE PATENTSCHRIFT

(11) **EP 1 326 727 B1**
(45) Veröffentlichungstag und Bekanntmachung des Hinweises auf die Patenterteilung: **19.05.2004**
(21) Anmeldenummer: 01962937.7
(22) Anmeldetag: 11.08.2001
(51) Int. Cl.: B23B 29/034

(54) **ROTIERENDES WERKZEUG**
ROTARY TOOL
OUTIL ROTATIF

(30) Priorität: 20.10.2000 DE 10052016
(43) Veröffentlichungstag der Anmeldung: 16.07.2003
(73) Patentinhaber: HARTMETALL-WERKZEUGFABRIK PAUL HORN GMBH, 72072 Tübingen (DE)
(72) Erfinder: OETTLE, Matthias, 72585 Riederich (DE)
(74) Vertreter: Bartels, Martin Erich Arthur
(86) Internationale Anmeldenummer: PCT/EP2001/009312
(87) Internationale Veröffentlichungsnummer: WO 2002/034440

(56) Entgegenhaltungen:
- DE-A- 3 312 990
- DE-U- 9 101 149
- FR-A- 1 180 135
- US-A- 2 676 501

## Beschreibung

Die Erfindung bezieht sich auf ein die Merkmale des Oberbegriffs des Anspruchs 1 aufweisendes, rotierendes Werkzeug, insbesondere auf ein Bohroder Fräswerkzeug.

Bei einem bekannten rotierenden Werkzeug gemäß der EP-A-0 296 460 erfolgt die Veränderung des Schneidkreisdurchmessers durch Verdrehen des exzentrisch zur Drehachse gelagerten Schneidkörperträgers abhängig von dem auf das Werkzeug im Betrieb einwirkenden Drehmoment. Zu diesem Zweck ist der Schneidkörperträger durch eine Drehfeder in eine erste Anschlagstellung, die einem ersten Schneidkreisdurchmesser entspricht, vorgespannt. Aus dieser Stellung erfolgt eine Verdrehung gegen die Wirkung der Drehfeder, wenn das Arbeitsdrehmoment einen Schwellenwert übersteigt. Auf diese Weise ergibt sich eine selbsttätige Einstellung unterschiedlicher Schneidkreisdurchmesser für Bearbeitungsvorgänge des Schlichtens und des mit höherem Arbeitsdrehmoment erfolgenden Schrubbens.

Durch die DE-U-91 01 149 ist ein gattungsgemäßes Werkzeug bekannt, mit einer Arretiereinrichtung, mittels deren der Schneidkörperträger mit dem Kopfstück in gewählten Drehpositionen verriegelbar ist, die dem gewünschten Schneidkreisdurchmesser der Schneide des Schneidkörpers entsprechen. Das bekannte Werkzeug weist an seinem einen Ende einen DINkonformen konischen Aufnahmeschaft für das Festlegen des Werkzeuges an einer Bearbeitungsmaschine auf und am anderen Ende ist das Werkzeug mit einer Schneidplatte versehen, die in einer bohrstangenartigen Auskragung des Werkzeuges gelagert ist. Die Mitte des Bearbeitungsdurchmessers für das Schneidwerkzeug ist gegenüber der Drehachse des Werkzeuges an sich um eine Exzentrizität versetzt angeordnet und zum Einstellen des Exzentrizitätsversatzes wird entgegen der Wirkung einer Kupplungseinrichtung und mithin entgegen der Kraft einer Druckfeder Schrägverzahnungselemente des Werkzeughalters und des Schneidkörperträgers mit der Schneidplatte außer und nach Verdrehen um die Längsachse des Werkzeuges im/oder entgegen dem Uhrzeigersinn versetzt wieder in Eingriff gebracht

Mit der bekannten Lösung ist es mithin möglich, bei einem rotierenden Werkzeug nicht nur eine Einstellung des Schneidkreisdurchmessers zwischen zwei für spezielle Bearbeitungsvorgänge vorgesehenen Schneidkreisdurchmessem zu ermöglichen, sondern es ist eine schnelle Änderung des Schneidkreisdurchmessers um vorgebbare Einstellbereiche auch mit kleinen vorzunehmenden Änderungen möglich. Dennoch weist die bekannte Lösung eine Vielzahl an Bauteilen auf, die zu entsprechend großen Baumassen führen, die von ihrem Unwuchtverhalten her entsprechend beherrscht werden müssen, um zu guten Bearbeitungsgenauigkeiten zu gelangen.

Durch die DE-A-33 12 990 ist es darüber hinaus bekannt, bei einem Werkzeug in der eine Lagerbohrung umgebenden Randfläche eines Kopfstückes an der eine Schulterfläche des Flansches des Schneidkörperträgers geführt ist, Rastvertiefungen vorzusehen, die mit einem im Flansch des Schneidkörperträgers vorgesehenen federbelasteten Rastteil unter Bildung von Drehverastungen zwischen Schneidkörperträger und Kopfstück zusammenwirken, um dergestalt den auswechselbar gehaltenen Schneidkörper auf verschiedene Ausdrehdurchmesser einzustellen.

Ausgehend von dem gattungsgemäßen Stand der Technik liegt der Erfindung die Aufgabe zugrunde, ein rotierendes Werkzeug zu schaffen mit einer geringen Anzahl von Bauteilen, welches daher einfach und kostengünstig herstellbar ist. Femer ist Ziel der Erfindung eine geringe Baumasse zu erreichen, um dergestalt der Entstehung problematischer Unwuchten entgegen zu wirken. Eine dahingehende Aufgabe löst ein rotierendes Werkzeug mit den Merkmalen des Patentanspruches 1 in seiner Gesamtheit.

Dadurch, daß gemäß dem kennzeichnenden Teil des Patentanspruches 1 der Schneidkörperträger eine als Sitz für eine Schneidplatte dienende, sich von der Stirnfläche des Flansches in den Lagerzapfen hinein erstreckende Öffnung aufweist und daß zum Spannen der Schneidplatte ein im Lagerzapfen sitzendes Spannmittel, insbesondere Spannschraube vorgesehen ist, das durch eine sich vom Umfang des Kopfstückes her in die Lagerbohrung erstreckende Bohrung hindurch bei ausgewählter Drehposition des Schneidkörperträgers zugänglich ist, ist ein Werkzeug erhalten, das sich durch eine geringe Anzahl von Bauteilen auszeichnet und daß daher einfach und kostengünstig herstellbar ist. Durch die geringe Anzahl an Bauteilen ist darüber hinaus die Baumasse gering, so daß weitestgehend der Entstehung problematischer Unwuchten entgegen gewirkt ist.

Die Wahl der Größe der Exzentrizität der Einstellachse bei dem erfindungsgemäßen Werkzeug gegenüber der Drehachse und der Größe des Radialabstandes, um den die Schneide des Schneidkörpers am Schneidkörperträger gegenüber der Einstellachse angeordnet ist, bestimmt die Größe der Änderung des Schneidkreisdurchmessers pro Winkeleinheit der Verdrehung des Schneidkörperträgers relativ zum Kopfstück des Schaftes. Dabei können die Verhältnisse auf einfachste Weise so gestaltet werden, daß sich eine gewünschte Feineinstellung des Schneidkreisdurchmessers beim Verdrehen des Schneidkörperträgers ergibt, der in der jeweiligen Drehposition sodann mittels der Arretiereinrichtung gegen weitere Verdrehung gesichert wird.

Bei einem vorteilhaften Ausführungsbeispiel weist der Schneidkörperträger zur Bildung der Drehlagerung am Kopfstück des Schaftes einen Lagerzapfen auf, der in einer zur Drehachse des Schaftes exzentrischen und zur Einstellachse konzentrischen Lagerbohrung des Kopfstückes passend drehbar gelagert ist, wobei die Schneide des Schneidkörpers zur Achse des Lagerzapfens in einem Radialabstand exzentrisch versetzt angeordnet ist.

Das erfindungsgemäße Werkzeug kann so ausgelegt werden, daß der volle Verstellbereich für den Schneidkreisdurchmesser, der sich bei einer Verdrehung von Schneidkörperträger zu Kopfstück des Schaftes um 180° ergibt, in feste Verstellschritte unterteilt ist, beispielsweise in Verstellschritte des Schneidkreisdurchmessers von 0,1 mm oder 0,05 mm. Zu diesem Zweck kann zwischen Schneidkörperträger und Kopfstück eine Rasteinrichtung vorgesehen sein, beispielsweise in Form einer Kugelverrastung, wobei am Schneidkörperträger eine federbelastete Rastkugel vorgesehen ist, die in Rastvertiefungen einfallen kann, die am Kopfstück des Schaftes so angeordnet sind, daß sie eine Verrastung in den den gewünschten Schneidkreisdurchmesseränderungen entsprechenden Drehschritten bewirken.

Nachstehend ist die Erfindung anhand eines in der Zeichnung dargestellten Ausführungsbeispieles im einzelnen erläutert. Es zeigen:
- Fig. 1: eine perspektivische Ansicht eines Fräswerkzeuges gemäß einem Ausführungsbeispiel der Erfindung;
- Fig. 2 und 3: gegenüber Fig. 1 in unterschiedlichen und jeweils größeren Maßstäben sowie in auseinandergezogener perspektivischer Darstellung gezeigte Ansichten des Fräswerkzeuges und
- Fig. 4: eine in weiter vergrößertem Maßstab gezeichnete Draufsicht des frontseitigen Endes des Kopfstückes am Werkzeugschaft des Ausführungsbeispieles.

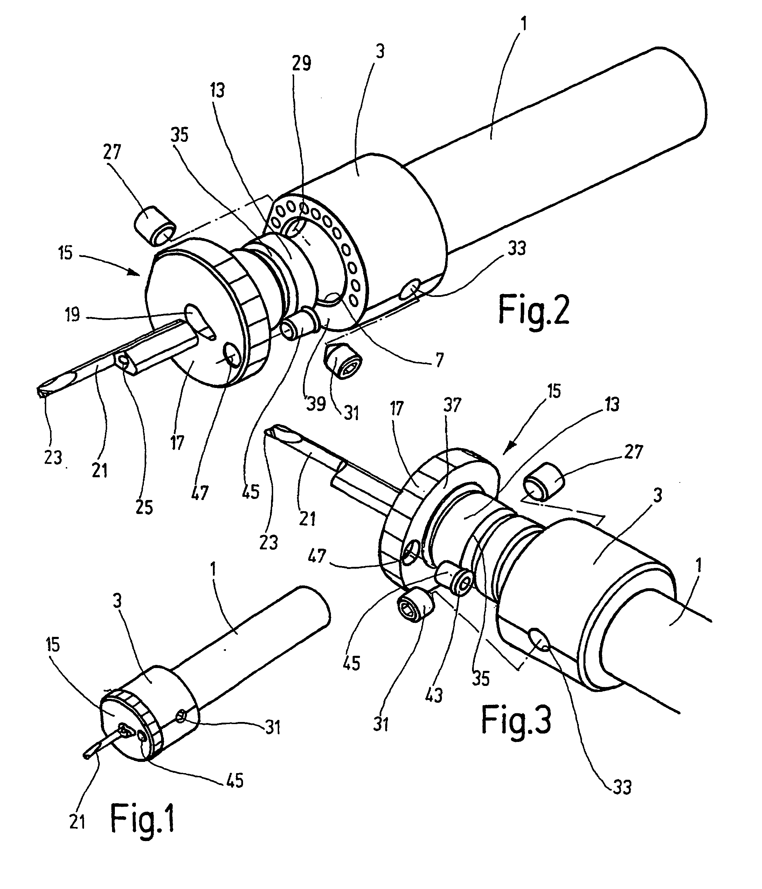

Fig. 1 zeigt die Gesamtansicht des Ausführungsbeispieles in Form eines Fräswerkzeuges in zusammengebautem Zustand, wobei der mit einem Drehantrieb (nicht gezeigt) verbindbare Werkzeugschaft mit 1 und ein demgegenüber im Durchmesser erweitertes, am frontseitigen Ende des Schaftes 1 einstückig angeformtes Kopfstück mit 3 bezeichnet sind. Das kreiszylindrische Kopfstück 3 ist mit dem ebenfalls kreiszylindrischen Schaft 1 und der durch diesen definierten Werkzeug-Drehachse 5 konzentrisch.

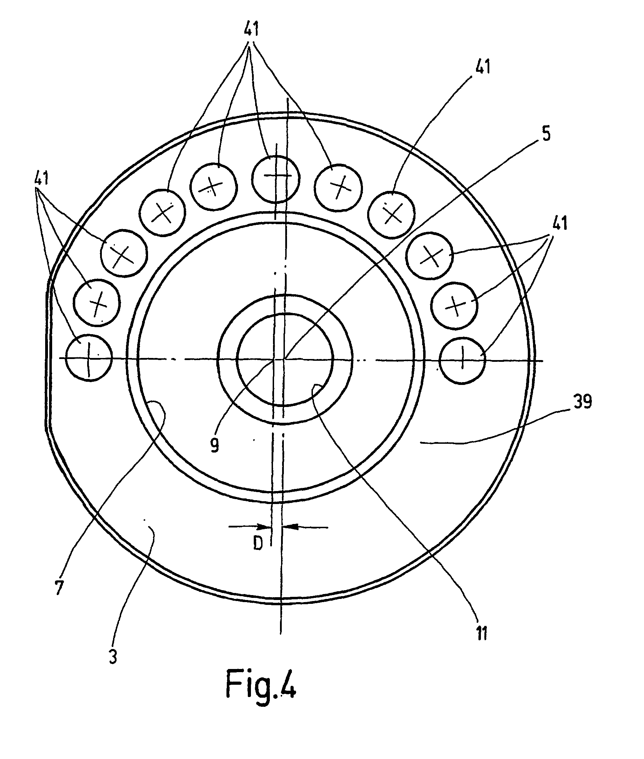

Wie aus Fig. 4 zu ersehen ist, weist das am frontseitigen Ende des Werkzeugschaftes 1 befindliche Kopfstück 3 eine Lagerbohrung 7 auf, die relativ zur Drehachse 5 des Schaftes 1 um einen in Fig. 4 mit D bezeichneten Abstand exzentrisch versetzt ist und ihrerseits eine Einstellachse 9 definiert. Wie ebenfalls aus Fig. 4 zu ersehen ist, befindet sich im Schaft 1 eine durchgehende Innenbohrung 11, die in die Lagerbohrung 7 des Kopfstückes 3 mündet, zur Drehachse 5 des Schaftes konzentrisch ist und einen Strömungskanal für eine Kühlmittelzufuhr bildet.

Wie aus Fig. 2 und 3 zu ersehen ist, bildet die Lagerbohrung 7 im Kopfstück 3 in Zusammenwirkung mit einem darin passend aufnehmbaren Lagerzapfen 13 eine Drehlagerung für einen mit dem Lagerzapfen 13 einstückigen Schneidkörperträger 15. Dieser weist an seinem dem zu bearbeitenden Werkstück zugewandten Ende einen im Durchmesser gegenüber dem Lagerzapfen 13 vergrößerten, runden Flansch 17 auf, der an seinem frontseitigen, d.h. dem zu bearbeitenden Werkstück zugewandten Ende eine Öffnung 19 (Fig. 2) als Sitz für eine als Schneidkörper dienende Schneidplatte 21 aufweist. Für die Kühlmittelzufuhr zur Schneide 23 der Schneidplatte 21 weist letztere eine Durchgangsbohrung 25 (Fig. 2) auf, die über die Öffnung 19 im Flansch 17 des Schneidkörperträgers und eine sich anschließende, nicht gezeigte innere Bohrung des Lagerzapfens 13, den Zuführkanal.für das Kühlmittel über die Innenbohrung 11 im Schaft 1 fortsetzt.

Die Schneidplatte 21 ist in der ihren Sitz bildenden Öffnung 19 gegen Verdrehen aufgrund der zur Schneidplatte 21 passenden unrunden Form der Öffnung 19 gesichert und ist axial mittels einer Klemmschraube 27 (Fig. 2 und 3) gesichert, welche in einer nicht gezeigten Gewindebohrung des Lagerzapfens 13 sitzt und, wie in Fig. 2 und 3 durch strichpunktierte Linien verdeutlicht ist, durch eine nur in Fig. 2 gezeigte radiale Bohrung 29 hindurch, die in der die Lagerbohrung 7 umgebenden Wand des Kopfstückes 3 ausgebildet ist, bei ausgewählter Drehstellung von Lagerzapfen 13 und Kopfstück 3 zugänglich ist. Der Lagerzapfen 13 seinerseits ist in der Lagerbohrung 7 mittels einer Klemmschraube 31 fixierbar, die in einer Gewindebohrung 33 in der die Lagerbohrung 7 umgebenden Wand des Kopfstückes 3 sitzt und mit dem Lagerzapfen 13 zusammenwirkt. Dieser weist eine in ihn eingearbeitete Ringnut 35 auf, die bei in die Lagerbohrung 7 eingesetztem Lagerzapfen 13 mit der Klemmschraube 31 fluchtet. Bei dieser Anordnung bleibt der Lagerzapfen 13 in der Lagerbohrung 7 axial gesichert, ist jedoch relativ zum Kopfstück 3 verdrehbar, wenn die Klemmschraube 31 nur so weit gelockert wird, daß sie noch, ohne Klemmwirkung, in die Ringnut 35 eingreift.

Der Flansch 17 des Schneidkörperträgers 15 bildet am Übergang zum Lagerzapfen 13 eine in der Radialebene liegende Schulterfläche 37, die im zusammengebauten Zustand des Werkzeuges an der die Lagerbohrung 7 begrenzenden, ebenen Randfläche 39 des Kopfstückes 3 bei der der Einstellung des Schneidkreisdurchmessers dienenden Drehbewegung geführt ist. Über einen Bereich von 180° gleichmäßig verteilt sind, wie aus Fig. 2 und 4 zu ersehen ist, in der Randfläche 39 kalottenförmige Rastvertiefungen 41 eingearbeitet, die zusammen mit einer federbelasteten Rastkugel 43, die in einem Federhaus 47 sitzt, weiches wiederum in einem Durchbruch 47 des Flansches 17 sitzt, eine Drehverrastung mit den Rastvertiefungen 41 ermöglicht. Die Vertiefungen 41 sind beim gezeigten Beispiel so angeordnet, daß bei der Verdrehung des Schneidkörperträgers 15 relativ zum Kopfstück 3 über den vollen Verstellbereich von 180° die Drehbewegung in zehn Drehschritte unterteilt ist.

Wie aus Fig. 4 deutlich erkennbar ist, sind die Vertiefungen 41 auf einem zur Lagerbohrung 7 und somit zur Einstellachse 9 konzentrischen und zur Drehachse 5 exzentrischen Kreisbogen in gleichen Abständen verteilt angeordnet, nämlich dem Kreisbogen, den die Rastkugel 43 bei der Drehung des Lagerzapfens 13 in der Lagerbohrung 7 beschreibt. Diese Drehbewegung führt zu einer Änderung des Schneidkreisdurchmessers der Schneide 23 des Schneidkörpers 21, wenn dieser am Schneidkörperträger 15 in solcher Position angeordnet ist, daß sich die Schneide 23 in einem Radialabstand exzentrisch gegenüber der Einstellachse 9 befindet.

Wenn der Lagerzapfen 13 gegenüber dem Umfang des Flansches 17 um den gleichen Radialabstand exzentrisch versetzt ist, um den die Lagerbohrung 7 gegenüber der Drehachse 5 exzentrisch versetzt ist, welcher Abstand in Fig. 4 mit D verdeutlicht ist, dann ist bei einer relativen Drehstellung von Schneidkörperträger 15 und Kopfstück 3 der Umfang des Flansches 17 konzentrisch zum Umfang des Kopfstückes 3. Diese für den Benutzer leicht wahrnehmbare Drehstellung kann als Ausgangsstellung für den Einstellbereich vorgesehen sein, wobei sich der Umfang des Flansches 17 bei fortschreitender Verstellbewegung, d.h. dem Verdrehen des Schneidkörperträgers 15, fortschreitend exzentrisch relativ zum Kopfstück 3 verschiebt.

Wenn eine stufenlose Verstellung gewünscht wird, kann das Federhaus 45 mit der Rastkugel 43 weggelassen werden. Anstelle der in Stufen vorgesehenen Drehverrastung oder zusätzlich hierzu können am Umfang des Kopfstückes 3 und am Umfang des Flansches 17 des Schneidkörperträgers Markierungen vorgesehen sein, die die Verstellung anzeigen und das Einstellen erleichtern.

## Patentansprüche

1. Rotierendes Werkzeug mit einem die Drehachse (5) definierenden Schaft (1), der mit einem Drehantrieb kuppelbar ist und an seinem freien Ende ein Kopfstück (3) aufweist, mit dem ein Schneidkörper (21) in einer Lageanordnung lösbar verbindbar ist, bei der sich die Schneide (23) des Schneidkörpers (21) in einem einem gewünschten Schneidkreisdurchmesser entsprechenden Radialabstand von der Drehachse (5) befindet, und mit einem als Halter des Schneidkörpers (21) dienenden Schneidkörperträger (15), der am Kopfstück (3) um eine Einstellachse (9) drehbar gelagert ist, die zur Drehachse (5) des Schaftes (1) parallel und zu dieser exzentrisch versetzt ist, wobei die Schneide (23) des Schneidkörpers (21) am Schneidkörperträger (15) gegenüber der Einstellachse (9) um einen Radialabstand versetzt anbringbar ist, und wobei eine Arretiereinrichtung (31) vorhanden ist, mittels deren der Schneidkörperträger (15) mit dem Kopfstück (3) in gewählten Drehpositionen verriegelbar ist, die dem gewünschten Schneidkreisdurchmesser der Schneide (23) des Schneidkörpers (21) entsprechen, **dadurch gekennzeichnet, daß** der Schneidkörperträger (15) eine als Sitz für eine Schneidplatte (21) dienende, sich von der Stimfläche des Flansches (17) in den Lagerzapfen (13) hinein erstreckende Öffnung (19) aufweist und daß zum Spannen der Schneidplatte (21) ein im Lagerzapfen (13) sitzendes Spannmittel, insbesondere Spannschraube (27) vorgesehen ist, das durch eine sich vom Umfang des Kopfstückes (3) her in die Lagerbohrung (7) erstrekkende Bohrung (29) hindurch bei ausgewählter Drehposition des Schneidkörperträgers (15) zugänglich ist.

2. Werkzeug nach Anspruch 1, **dadurch gekennzeichnet, daß** der Schneidkörperträger (15) für die Bildung der Drehlagerung am Kopfstück (3) des Schaftes (1) einen Lagerzapfen (13) aufweist, der in einer zur Drehachse (5) des Schaftes (1) exzentrischen und zur zur Einstellachse (9) konzentrischen Lagerbohrung (7) des Kopfstückes (3) passend drehbar gelagert ist, und daß die Schneide (23) des Schneidkörpers (21) zur Achse des Lagerzapfens (13) in einem Radialabstand exzentrisch versetzt angeordnet ist.

3. Werkzeug nach Anspruche 2, **dadurch gekennzeichnet, daß** die Arretiereinrichtung eine sich durch die die Lagerbohrung (7) begrenzende Wand des Kopfstückes (3) erstreckende Klemmschraube (31) beinhaltet, die mit dem in der Lagerbohrung (7) befindlichen Lagerzapfen (13) des Schneidkörperträgers (15) zusammenwirkt.

4. Werkzeug nach Anspruch 3, **dadurch gekennzeichnet, daß** der Lagerzapfen (13) des Schneidkörperträgers (15) eine in ihn eingearbeitete, mit der Klemmschraube (31) fluchtende Ringnut (35) aufweist.

5. Werkzeug nach Anspruch 4, **dadurch gekennzeichnet, daß** das Kopfstück (3) einen gegenüber dem mit dem Drehantrieb zusammenwirkenden Abschnitt des Schaftes (1) vergrößerten Außendurchmesser mit einer zur Drehachse (5) konzentrischen Außenmantelfläche besitzt und daß der Schneidkörperträger (15) an dem der Schneide (23) des Schneidkörpers (21) zugewandten Ende des Lagerzapfens (13) einen Flansch (17) besitzt, der eine an den Lagerzapfen (13) angrenzende, in der Radialebene liegende Schulterfläche (37) bildet, die an der die Lagerbohrung (7) begrenzenden Randfläche (39) des Kopfstückes (3) bei der der Einstellung des Schneidkreisdurchmessers dienenden Drehbewegung geführt ist.

6. Werkzeug nach Anspruch 5, **dadurch gekennzeichnet, daß** der Außendurchmesser des Flansches (17) des Schneidkörperträgers (15) dem Außendurchmesser der die Lagerbohrung (7) umgebenden Außenmantelfläche des Kopfstückes (3) angepaßt ist und daß der Lagerzapfen (13) zum Umfang des Flansches (17) um einen Radialabstand exzentrisch versetzt ist, der der Versetzung (D) der Einstellachse (9) zur Drehachse (5) des Schaftes (1) entspricht.

7. Werkzeug nach Anspruch 5 oder 6, **dadurch gekennzeichnet, daß** in der die Lagerbohrung (7) umgebenden Randfläche (39) des Kopfstückes (3), an der die Schulterfläche (37) des Flansches (17) des Schneidkörperträgers (15) geführt ist, Rastvertiefungen (41) ausgebildet sind, die mit einer im Flansch (17) des Schneidkörperträgers (15) vorgesehenen, federbelasteten Rastkugel (43) zur Bildung von Drehverrastungen zwischen Schneidkörperträger (15) und Kopfstück (3) zusammenwirken.

8. Werkzeug nach einem der Ansprüche 1 bis 7, **dadurch gekennzeichnet, daß** der Schaft (1) eine als Kühlmittelkanal dienende, innere durchgehende Längsbohrung (11) besitzt und daß der Lagerzapfen (13) eine die Fortsetzung des Kühlmittelkanals bildende, innere Längsbohrung, die sich in den Sitz (19) der Schneidplatte (21) erstreckt, aufweist

## Claims

1. Rotating tool with a shaft (1) defining the axis of rotation (5), the said shaft being connectable to a rotary drive and having a head piece (3) at its free end to which a cutter (21) is removably connectable in a positional arrangement, in which the cutting edge (23) of the cutter (21) is located at a radial distance from the axis of rotation (5) corresponding to a required cutting diameter, and with a cutter carrier (15) serving as a holder for the cutter (21) which is mounted at the head piece (3) rotatably around a setting axis (9) which is offset parallel and eccentrically in relation to the axis of rotation (5) of the shaft (1), whereby the cutting edge (23) of the cutter (21) can be fitted at the cutter carrier (15) at an offset by a radial distance in relation to the setting axis (9), and whereby a locking device (31) being available by means of which the cutter carrier (15) is lockable with the head piece (3) in selected rotating positions which correspond to the required cutting diameter of the cutting edge (23) of the cutter (21), **characterised in that** the cutter carrier (15) has an opening (19) which serves as a seat for a cutting insert (21) extending from the end face of the flange (17) to the bearing pin (13), and **in that** for clamping the cutting insert (21) there is in the bearing pin (13) a clamping means, especially a clamping screw (27), which is accessible, with the cutter carrier (15) in a selected rotary position, through a bore (29) extending from the periphery of the head piece (3) to the bearing bore (7).

2. Tool according to Claim 1, **characterised in that** the cutter carrier (15) has a bearing pin (13), to form the rotary bearing at the head piece (3) of the shaft (1), which sits rotatably in a bearing bore (7) in the head piece (3) which is eccentric in relation to the axis of rotation (5) of the shaft (1) and concentric to the setting axis (9) and **in that** the cutting edge (23) of the cutter (21) is eccentrically offset at a radial distance in relation to the axis of the bearing pin (13).

3. Tool according to Claim 2, **characterised in that** the locking device includes a clamping screw (31) extending through the wall of the head piece (3) which limits the bearing bore (7), which co-acts with the bearing pin (13) of the cutter carrier (15) located in the bearing bore (7).

4. Tool according to Claim 3, **characterised in that** the bearing pin (13) of the cutter carrier (15) has an annular groove (35) cut in it and aligned with the clamping screw (31).

5. Tool according to Claim 4, **characterised in that** the head piece (3) has an outside diameter with a circumferential surface concentric to the axis of rotation (5) which is enlarged compared to the section of the shaft (1) co-acting with the rotary device, and that the cutter carrier (15) has a flange (17) at the end of the bearing pin (13) facing the cutting edge (23) of the cutter (21), which forms a shoulder face (37) in the radial plane, adjoining the bearing pin (13), guided during the rotary movement serving the purpose of setting the cutting diameter, at the peripheral face (39) of the head piece (3) delimiting the bearing bore (7).

6. Tool according to Claim 5, **characterised in that** the outside diameter of the flange 17 of the cutter carrier (15) is suited to the outer superficies of the head piece (3) enclosing the outside diameter of the bearing bore (7) and that the bearing pin (13) is eccentrically offset in relation to the periphery of the flange (17) by a radial distance which corresponds to the offset (D) of the setting axis (9) in relation to the axis of rotation (5) of the shaft (1).

7. Tool according to Claim 5 or 6, **characterised in that** locking depressions (41) are formed in the face (39) of the head piece (3) surrounding the bearing bore (7) at which the shoulder face (37) of the flange (17) of the cutter carrier (15) is guided, the said locking depressions co-acting with a spring-loaded locking ball (43) sitting in the flange (17) of the cutter carrier (15) and providing the locking action against rotation between the cutter carrier (15) and the head piece (3).

8. Tool according to one of the Claims 1 to 7, **characterised in that** the shaft (1) has an internal longitudinal through bore (11) serving as a cooling channel and that the bearing pin (13) has an inner longitudinal bore forming the extension of the cooling channel, extending to the seat (19) of the cutting insert (21).

## Revendications

1. Outil rotatif comprenant une queue d'outil (1), qui définit l'axe de rotation (5) et qui peut être couplée à un mécanisme d'entraînement rotatif et dont l'extrémité libre comporte une partie de tête (3), qui peut être assemblée de manière amovible avec un corps de coupe (21) dans une position, dans laquelle le taillant (23) du corps de coupe (21) est écarté de l'axe de rotation (5) selon une distance radiale correspondant au diamètre souhaité du cercle de coupe, et comprenant un porte-corps de coupe (15), qui fait fonction de support pour le corps de coupe (21) et qui est monté contre la partie de tête (3) de manière rotative autour d'un axe de réglage (9), qui est parallèle à l'axe de rotation (5) de la queue d'outil (1) et est décalé de manière excentrée à celle-ci, le taillant (23) du corps de coupe (21) pouvant être monté contre le porte-corps de coupe (15) de manière décalée sur une distance radiale par rapport à l'axe de réglage (9), et un dispositif de blocage (31) étant prévu pour bloquer le porte-corps de coupe (15) avec la partie de tête (3) dans des positions de rotation choisies, qui correspondent au diamètre souhaité du cercle de coupe du taillant (23) du corps de coupe (21), **caractérisé en ce que** le porte-corps de coupe (15) comporte un orifice (19) qui fait fonction de logement pour une plaquette de coupe (21) et s'étend à partir de la face frontale de la bride (17) vers l'intérieur du tourillon (13) et **en ce que** pour le serrage de la plaquette de coupe (21) il est prévu un moyen de serrage, en particulier une vis de serrage (27), qui est logé dans le tourillon (13) et qui, dans la position de rotation souhaitée du porte-corps de coupe (15), est accessible à travers une forure (29) qui s'étend à partir de la périphérie de la partie de tête (3) dans la forure de support (7).

2. Outil selon la revendication 1, **caractérisé en ce que** le porte-corps de coupe (15), pour former le coussinet de rotation au niveau de la partie de tête (3) de la queue d'outil (1), comporte un tourillon (13), qui est logé de manière rotative adaptée dans une forure de support (7), qui est réalisée dans la partie de tête (3) et qui est excentrée par rapport à l'axe de rotation (5) de la queue d'outil (1) et concentrique à l'axe de réglage (9), et **en ce que** le taillant (23) du corps de coupe (21) est décalé de manière excentrée sur une distance radiale par rapport à l'axe du tourillon (13).

3. Outil selon la revendication 2, **caractérisé en ce que** le dispositif de blocage est formé par une vis de blocage (31) qui passe à travers la paroi délimitant la forure de support (7) dans la partie de tête (3) et qui coopère avec le tourillon (13), logé dans la forure de support (7), du porte-corps de coupe (15).

4. Outil selon la revendication 3, **caractérisé en ce que** le tourillon (13) du porte-corps de coupe (15) comporte une rainure annulaire (35) qui est réalisée dans ledit porte-corps de coupe et est alignée avec la vis de blocage (31).

5. Outil selon la revendication 4, **caractérisé en ce que** la partie de tête (3) a un diamètre extérieur, qui est supérieur à la partie de la queue d'outil (1) coopérant avec le mécanisme d'entraînement rotatif et qui a une surface d'enveloppe extérieure concentrique à l'axe de rotation (5), et **en ce que** le porte-corps de coupe (15), au niveau de l'extrémité du tourillon (13) orientée vers le taillant (23) du corps de coupe (21), comporte une bride (17), qui forme une surface d'épaulement (37), qui est contiguë au tourillon (13) dans le plan radial et qui est guidée contre le bord (39), délimitant la forure de support (7), de la partie de tête (3) pendant le mouvement de rotation destiné au réglage du diamètre du cercle de coupe.

6. Outil selon la revendication 5, **caractérisé en ce que** le diamètre extérieur de la bride (17) du porte-corps de coupe (15) est adapté au diamètre extérieur de la paroi extérieure de la partie de tête (3) entourant la forure de support (7) et **en ce que** le tourillon (13) est décalé de manière excentrée par rapport à la périphérie de la bride (17) sur une distance radiale, qui correspond au décalage (D) de l'axe de réglage (9) par rapport à l'axe de rotation (5) de la queue d'outil (1).

7. Outil selon la revendication 5 ou 6, **caractérisé en ce que** des creux de blocage (41) sont réalisés dans le bord (39) de la partie de tête (3), qui entoure la forure de support (7) et contre lequel est guidée la surface d'épaulement (37) de la bride (17) du porte-corps de coupe (15), lesquels creux de blocage, pour former des blocages anti-rotation entre le porte-corps de coupe (15) et la partie de tête (3), coopèrent avec une sphère d'arrêt (43) sollicitée par ressort et prévue dans la bride (17) du porte-corps de coupe (15).

8. Outil selon l'une quelconque des revendications 1 à 7, **caractérisé en ce que** la queue d'outil (1) comporte une forure longitudinale (11) débouchante intérieure, faisant fonction de canal pour fluide de refroidissement, et **en ce que** le tourillon (13) comporte une forure longitudinale intérieure, qui forme le prolongement du canal pour fluide de refroidissement et qui s'étend jusque dans le logement (19) de la plaquette de coupe (21).
